# EUROPEAN PATENT SPECIFICATION

(11) **EP 3 048 553 B1**
(45) Date of publication and mention of the grant of the patent: **26.06.2019**
(21) Application number: 15152172.1
(22) Date of filing: 22.01.2015
(51) Int. Cl.: G06F 21/57, G06F 21/12, G06F 21/51

(54) **Method for distributing applets, and entities for distributing applets**
Verfahren zur Verteilung von Applets und Entitäten zur Verteilung von Applets
Procédé permettant de distribuer des appliquettes et des entités pour distribuer les applets

(43) Date of publication of application: 27.07.2016
(73) Proprietor: Fraunhofer-Gesellschaft zur Förderung der angewandten Forschung e.V., 80686 München (DE); Technische Universität Darmstadt, 64289 Darmstadt (DE)
(72) Inventor: Dmitrienko, Alexandra, 64297 Darmstadt (DE); Sadeghi, Ahmad-Reza, 64297 Darmstadt (DE)
(74) Representative: Pfenning, Meinig & Partner mbB

(56) References cited:
- EP-A2- 0 942 349
- WO-A1-00/70429
- US-A1- 2004 015 958
- KARI KOSTIAINEN ET AL: "On-board credentials with open provisioning", INFORMATION, COMPUTER, AND COMMUNICATIONS SECURITY; 20090310 - 20090312, 10 March 2009 (2009-03-10), pages 104-115, XP058026490, DOI: 10.1145/1533057.1533074 ISBN: 978-1-60558-394-5

## Description

### Field

The application relates to a method for distributing applets, and various entities for distributing applets, such as a stakeholder, a host, a secure environment, or a code distribution system according to the claims.

### Background

The increasing computing, storage and networking capabilities and the vast number and variety of mobile apps make smart devices convenient replacements for traditional computing platforms such as laptops. As a consequence, mobile devices increasingly collect, store and process various privacy sensitive and security critical information about users such as e-mails and SMS messages, phone call history, location data, photos, authentication credentials (e.g., for online banking), etc. This makes them very attractive attack targets. Hence, mobile security has become an important topic for industrial and academic research in recent years.

One of the major approaches to harden mobile platform security is to leverage isolated (secure) environments, where apps can execute security sensitive operations (e.g., encryption, signing, etc.) in sub-routines referred to as trusted applications, applets or trustlets. While isolation between the secure environment and the rest of the mobile system can be enforced in software or in hardware, hardware-supported isolation provides stronger security guaranties: It can resist software-based attacks (e.g., compromised Operation System (OS)-level components) and even be resilient, to a certain degree, against physical tampering. Hardware-based isolated environments can be established on top of general purpose secure hardware, such as processor-based security extensions and dedicated secure co-processors. However, while such secure hardware has been available for a decade and even deployed on mobile platforms, it is owned and exclusively used by their respective stakeholders such as phone manufacturers and mobile network operators (MNOs). For instance, processor-based security extensions are normally used by phone manufacturers to securely store radio frequency parameters calibrated during the phone manufacturing process, or to ensure secure boot, while secure elements owned by MNOs (e.g., SIM-cards) are used to protect authentication credentials of users in mobile networks. However, they are almost never utilized by commercial apps developed by third parties. Exceptions are solutions driven by large service providers (e.g, NFC payment apps such as Google Wallet and upcoming Apple Pay).

One prior art approach for utilizing hardware-supported isolated (secure) environments was brought forward by Nokia in "On-board Credentials with Open Provisioning", Aug 29, 2008. The approach, named ObC, is based on a negotiation between a developer of an applet and a secure environment, such as the M-shield®- secure environment, mediated by a host, such as a mobile phone. The approach is based on the pre-condition that a developer can access a public key of an asymmetric key pair of the secure environment. The developer may use the public key to encrypt a symmetric key of the developer or host and initialize the applet transfer from the developer, through the host, to the secure environment by sending the encrypted symmetric key to the secure environment. Thereafter, the developer encrypts the applet with its symmetric key, and transfers the encrypted applet to the secure environment. As a final step, the developer sends an applet identifier, such as a hash value of the applet, to the secure-environment, for endorsement purposes. The secure environment performs all necessary steps without further consultation with the stakeholder, i.e. a system of the producer, manufacturer, or service provider of the secure environment. The developer only needs the public key of the asymmetric key pair.

However, the ObC approach by Nokia does not provide mechanisms for the stakeholder to obtain revenue for utilizing their secure environment. Hence, stakeholders do not have incentives to open access to their secure elements for third parties. Further, ObC solution does not provide mechanisms to configure access control to the applets by app developers. Currently, access to the secure code (executed in the isolated environment) from the app (executed within the operating system) on Nokia devices is enforced by the operating system and can be configured only by the operating system vendor. This requires additional collaboration between app developers and an OS vendor and imposes additional costs for developers.

Another method for distributing applets is known from US2004/015958A1 where applet are sent with an encrypted meta-data portion that can be validated at the host side by a secure processor as a condition to carry out the installation.

It is one of the technical tasks to be solved by the disclosure of this application to provide a code- or applet distribution system which provides alternative solutions for installing applets in a secure environment.

The problem is solved by the subject-matter of the independent claims and aspects of this application. Additional embodiments are outlined by the dependent claims or aspects, respectively and the detailed embodiments.

### SUMMARY

The method according to claim 1 includes the certification of an applet by a stakeholder. The applet, developed by any developer or provider, is submitted to the stakeholder. Furthermore, the developer submits an applet policy, which indicates at least one application, which may access the applet. In some embodiments the policy can be that any application may use the applet. The stakeholder generates an applet key, which may be used for certifying the applet. In various embodiments, certifying can involve a mere certification, an encryption or a certification and an encryption. Once the stakeholder has certified the applet, the stakeholder may in some embodiments store the applet key, the policy and the certified applet in a database. In some embodiments, the stakeholder may not store the certified applet, but only the applet itself, an identifier of the applet or no data of the applet, except the applet key and the policy.

The stakeholder may be in possession of a key of the secure environment. This secure environment key can for example be a key which is shared between the stakeholder and the secure environment or a public key of an asymmetric key pair of the secure environment. In several embodiments, the stakeholder does not need to share the secure environment key with either a developer, app market or a host.

The host, which in several embodiments may be a mobile host, can be connected or connectable to a secure environment. In some embodiments, the connection may be a wireless data connection, while in other embodiments the host is physically coupled to the secure environment for data transfer. The secure environment may provide the host with a secure environment identifier, which in some embodiments may be a unique identifier, in the sense that different secure environments have different identifiers.

When the applet is to be installed in a secure environment, which is connectable or connected to a preferably mobile host, the host sends the secure environment identifier and identifier of the applet to be installed to the stakeholder. The secure environment identifier and the applet identifier may in some embodiments be sent to the stakeholder wirelessly. Upon receiving the secure environment identifier and the applet identifier, the stakeholder searches for the applet key corresponding to the applet identifier and generates (or in other embodiments uses a pre-defined) token, which is encrypted using the secure environment key of the secure environment, where the secure environment is identified by the stakeholder through the secure environment identifier. While the secure environment identifier is accessible by the host, the secure environment key may not be accessible to or by the host in some embodiments.

The encrypted token includes the applet key and optionally the applet policy, both of which are encrypted and, thus, not readable by the host, which has limited or no access to the secure environment key. The stakeholder then sends the token to the host, which sends the certified applet and the token to the secure environment. The secure environment extracts information from the token, such as decrypting the applet key and applet policy, and uses the applet key to install the applet in the secure environment, and the applet policy to configure access control to the applet by the applications.

The method may be implemented as a code, for example in the shape of a program code, on a computer-readable medium, such as a transitory or non-transitory memory medium (e.g. CD-ROMs, Hard drives, Storage Arrays or Flash-Memories). The program code representing the method may be split in several sub-codes, each of which is configured to be stored and executed on the respective entities, such as the stakeholder, the host or the secure environment, respectively. The program code may be executed by a programmable hardware component, such as e.g. a CPU, GPU or multi-processor system.

The application further describes a host, a secure environment and a stakeholder configured to perform respective steps of the above outlined method.

### DETAILED DESCRIPTION

The summary gives a brief outline of the subject-matter of this description. A method according to claim 1 has the effect that all knowledge regarding the secure environment stays within the control of the stakeholder. Furthermore, the OS vendor does not necessarily need to be involved in the applet policy configuration. The applets may in some embodiments be distributed through code distribution markets which makes the collaboration between large stakeholders and small service developers more feasible.

By providing the tokens, the stakeholder also has the possibility of checking which applet is installed in which secure environment. Without the token, the host may not successfully install the applet. Since the token is encrypted using a key known to the secure environment (but in some embodiments not the host) the stakeholder may use its existing infrastructure to keep information about the secure environments which is publicly available at a minimum. In further embodiments, the stakeholder may be able to control, by the certification procedure, whether the applet complies with the security standards defined by the stakeholder itself or as outlined by a general coordinating body, such as Global platform, for example. Additionally, the checking of the applet policy has the effect that the stakeholder can check on the applications, which are indicated as having access to the applet according to the policy.

In the following, certain terminology used throughout this description is further illustrated.

"Application": An application refers to a routine, such as a computer readable code, which is to be executed by a processor of a host. In several embodiments, applications or apps refer to routine as can be acquired or purchased through an app market, such as Google Play, the Apple app store or the Amazon app shop.

"Applet": An applet (or trusted application or trustlet) is a routine or a subroutine, such as a computer-readable code, which is to be executed within a secure environment. An application may access applets, if the respective applet policy allows such use. In some embodiments, an applet is acquired from code distribution market, for example, as part of an application from such markets like Google Play and App store, or from a dedicated market place intended for applets (e.g., managed by the stakeholder of the secure environment).

"Secure environment": A secure environment in the context of this description refers to a hardware-based or software-based isolated execution environment for a code. This can refer to a hardware-based isolated execution environment, such as the TrustZone® of the M-Shield® processor-based security extensions, or dedicated secure co-processors, for example an embedded secure environment available on NFC-enabled mobile device. Further embodiments of a secure environment may, for example, be plug-in security cards for an SD card slot or Universal Integrated Circuit Cards (UICC) (also known as SIM cards). Software-emulated equivalents of these secure environments can also be used.

"Stakeholder": In the context of this description, the stakeholder refers to a system owned or controlled by an entity, which manufactures, produces, develops or distributes secure environments. The stakeholder has knowledge of a secure environment key and mechanisms to protect this knowledge. It furthermore has knowledge of the secure environments through secure environment identifiers. The stakeholder may include a processor, memory and at least one database, as well as an Input/Output system to communicate with third parties, such as a service or communications portal.

"Host": In the context of this description, a host can be any processor-based system, which has access to a secure environment and which can install applications. While in some embodiments, the host may primarily refer to mobile hosts, such as smartphones, tablets or laptops, other embodiments can refer to workstations which are typically non-mobile.

"Token": In the context of this description, a token may refer to a soft token, i.e. a generated code which may be sent wirelessly or via a wired connection from the stakeholder to the host. The connection may be a secure connection, such as an encrypted or secure connection, e.g. TLS based connection or a VPN, or a normal, unsecured connection. Even though the literature often identifies tokens with hardware-based token, this description understands tokens to include software based tokens.

"Developer": Entity programming an application, applet or applet policy and submitting it to a stakeholder. Possibly a human programmer or a system which deals with submitting the applet to the stakeholder system and/or code distribution market.

Further embodiments of the method and its components are described below.

In a further embodiment, the certification of the applet by the stakeholder involves an encryption of the applet using the applet key generated by the stakeholder by a mechanism ensuring the required security level of the applet key. Encrypting the applet has the advantage that reverse engineering of the applet will be more difficult for intruders or third parties. Whether the content of the applet is laid open, depends on the willingness of the developer to share these details with the public.

In a further embodiment, the certification of the applet includes the generation of an applet certificate by the stakeholder. The certificate ensures authenticity of the certified applet to a host or secure environment, for example. Several embodiments for generating the applet certificate are possible. For example, in some embodiments, a message authentication code (MAC) is generated from the applet using the applet key. This MAC can later be used to discover whether a third party has tampered with the applet. In a further example, the stakeholder may use a stakeholder key to generate a public certificate to provide a further check against tampering. In some embodiments, the certified applet can include an encrypted applet with an additional certificate or MAC.

In some embodiments, the certified applet is published in a distribution environment. This distribution environment can be an app market maintained by a third party or can be a dedicated applet market. The certified applet can be bundled together with an application, which is listed in the applet policy, for example. The publication of the certified applet on a well-established or well-trusted platform makes it easier to distribute the applets. However, the encrypted applet does not contain the applet key or the secure environment key. This information is not published, but in some embodiments under control of the stakeholder.

In some embodiments, the applet identifier submitted by the host to the stakeholder may be at least one of an applet package name, a randomly generated unique identifier, the applet itself, a hash of the applet, or an applet certificate. The applet identifier may be used by the stakeholder to identify the applet key to be included in the token.

In some embodiments the secure environment key is a symmetric key which is shared between the stakeholder and the secure environment, i.e. the same key is used for encrypting and decrypting procedures. This may have the effect that the stakeholder can generate the key and share the key with the secure environment. In other embodiments, the secure environment key used for encrypting the token by the stakeholder is the public key of an asymmetric key pair, where the private key of the pair is accessible by the secure environment only. This has the effect that security is enhanced and/or the public keys can be made available to third parties, if so desired by the stakeholder.

In some embodiments, the secure environment identifier submitted by the host to the stakeholder may be at least one of a randomly generated unique identifier, or a public key of the secure environment key, or a public key certificate of the secure environment key. The secure environment identifier may be used by the stakeholder to identify the secure environment for which the installation token will be generated and to generate an applet installation key.

In a further embodiment, the step of receiving the token by the host is further complemented by receiving a further key by the host from the stakeholder. This further key can be an applet installation key, which in this embodiment may be a prerequisite for successfully installing the applet in the secure environment. The applet installation key can be generated from the applet key and the secure environment identifier submitted by the host to the stakeholder. When installing the applet in the secure environment, the secure environment may decrypt the token to access the applet key, and may use the applet key to generate an applet installation key by itself. Only in case the applet installation key received by the host and the applet installation key derived by the secure environment are identical, the secure environment may proceed to install the applet in the secure environment. In these cases the further key may act as an authentication key also, enabling the secure environment to authenticate the host by proving possession of the authentication key. This may ensure that the secure environment can check whether the token received by the host was actually issued for a connected or connectable host, and not for some other host. An authentication of the host based on authentication key may also be performed through a challenge-response protocol between the host and the secure environment on the basis of the obtained or generated authentication key of the host or secure environment, respectively. However, in other embodiments other keys may be used to derive the applet installation key by the secure environment, for example a key shared by the host and the secure environment. In other embodiments, the applet installation key may be generated randomly by the stakeholder and included into the encrypted token. In this case, the secure environment decrypts the token to obtain the applet installation token. In other embodiments, the encrypted token may include information about the secure environment identifier. In these embodiments, the secure environment compares the secure environment identifier decrypted from the token with its own secure environment identifier.

In a further embodiment, the step of installing the applet in the secure environment includes extracting the applet key and the applet policy from the token. The applet policy may be used to configure, by the secure environment, which applications may access the applet to be installed or an already installed applet. In some embodiments, the applet policy may be added, by the secure environment, to an access controlling entity, e.g. an access control list. The access controlling entity may be readable by applications or non-isolated or non-secured execution environments or processors of the host, to identify which applications can use applets installed in the secure environments connected or connectable to the host. In some embodiments the access policy includes information that only one specific application, more than one specific application, such as two or more applications, a certain class of applications or any application may access the corresponding applet.

In some embodiments, once the applet key is extracted or decrypted from the token, the secure environment uses the applet key to verify certification or/and decrypt the applet received by the host and forwarded from the host to the secure environment. Whether the applet is only verified, only decrypted or both, depends on whether the certified applet was initially only certified, encrypted or both, by the stakeholder, upon submission of the applet and applet policy by the developer or applet provider.

In a further embodiment, the step of successfully installing the applet in the secure environment depends on a predetermined access condition. For example, the step of installing the applet depends only on receiving a token from the stakeholder. However, the receipt of the token may depend on the predetermined condition that the host makes a payment to the stakeholder. Only once the payment has been positively identified by the stakeholder, the token is delivered to the host. In other embodiments, the successful payment may result in the receipt of the token and/or authentication key by the host from the stakeholder.

In a further embodiment, the predetermined access condition may be the authentication of the secure environment identifier and/or authentication of the applet identifier. In other embodiments, the stakeholder may require the host to proof that it fulfills some security properties. For example, it may refuse to issue the token to a host if its operating system is rooted, or it detects some malicious activity on the host (e.g., security critical system-level binaries were alerted). In other embodiments, several predetermined access conditions may be used in combination.

While the previous embodiments mainly refer to a method for distributing applets for at least one application, the description also refers to a corresponding system, a stakeholder, a host or a secure environment configured for executing code which reflects the respective method steps.

As mentioned above, a stakeholder in the sense of this application may be a system, such as an electronic market platform, including at least one processor, such as an Intel, ARM or other processor platform, for performing or executing instructions such as key generation, token generation, storing procedures, or the like, at least one database for storing at least one of different applet keys, secure environment identifiers, secure environment keys, certified applets, corresponding applet policies or encrypted applets and an access system for establishing a data connection with different hosts or different developers or providers. The stakeholder may further include or be connected to a system for processing electronic payments in case payment is a predetermined access condition. At least one database may be stored on local hard disks or cloud-based services. Hence, the skilled person is aware of many different possibilities to implement a stakeholder based upon the disclosure of this description. Further, several hosts may access the stakeholder system, which retrieves the requested tokens based on the secure environment identifier of each host and the applet identifier of each host.

A host can be a standalone computer, a server or a mobile host, such as a smartphone, tablet or notebook. The host includes at least one processor for executing instructions to perform method steps relating to the host. Furthermore, it can be connected or is permanently connected to a secure environment, which may be an isolated execution environment either in software or in hardware. A hardware-based isolated execution environment may be part of a host processor, such as the Trustzone or M-Shield environments, or a secure card, such as a SIM card or a secure SD card. Other hardware-based secure environments can be used, such as a Java-based secure element or other secure elements of the Global Platform framework. In other embodiments, the software-based secure environments may be used, such as emulated Java card environments or emulated processor-based extensions.

While in some embodiments the secure environment is permanently and/or physically connected to the host or its processor, other embodiments allow for a temporary connection or a wireless based data connection between a host and a secure environment. For example a smartwatch or another wearable accessory may include a secure environment to which a smartphone is not permanently or physically connected.

An electronic market platform for distributing, publishing or accessing applets for third parties (e.g. hosts or developers) may also be claimed. The market platform may include features similar to existing market platform for applications.

The solution described in this description enables application developers to distribute applets via an application market place, e.g., packaged together with the mobile application. It relies on a developer to couple apps with corresponding applets; an approach which does not require interaction between OS vendors and secure environment stakeholders. Further, the scheme allows developers to define access control rules for accessing applets that are deployed during applet provisioning and independently from the OS vendor. Further, the claimed subject-matter makes use of tokens issued by secure environment stakeholders to end users, which selectively allows secure environment stakeholders to enforce per-installation license fees (e.g., if obtaining the installation token requires payment). Finally, some embodiments make use of a secure environment internal access control list as defined by Global Platform.

To further illustrate the subject matter of this description, the following figures are included.
- Fig. 1: shows a detailed example of a system for performing a method;
- Fig. 2: shows an example of a host and secure element connected to the host.

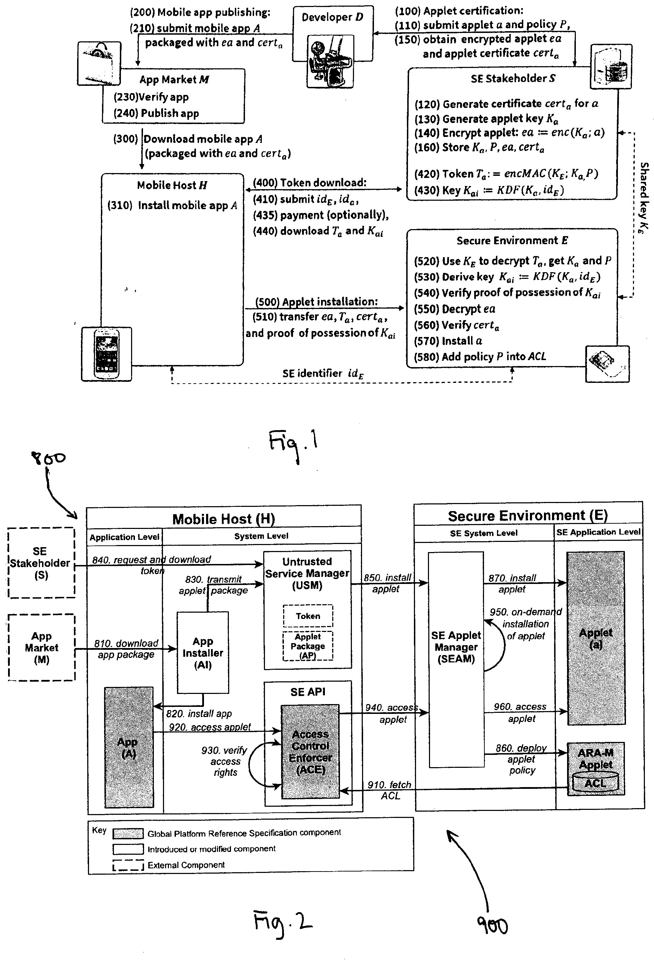

Figure 1 includes the an application market M, a stakeholder S, which may be operated by a secure environment producer and/or distributor, a mobile host H, such as a smartphone, a secure environment E, and a developer D, which has developed a mobile application A which includes security-sensitive sub-routines in a form of an applet a. The applet a may be invoked by the application A.

In the following, further examples of secure environments will be described. Generally, Global Platform specifies different implementations of isolated execution environments: Processor-based trusted execution environments (TEEs), and embedded or removable secure environments.

Processor-based TEEs are realized via a secure processor mode. Almost every smartphone and tablet today contains a processor-based TEE, such as TrustZone® and M-Shield®. However, their use requires third party developers to collaborate with mobile device vendors in order to get the security sensitive code admitted to run in a secure processor mode. Further, collaboration with the operating system vendor would also be required in order to enable communication between a mobile app and TEE-residing code.

Embedded secure environments are distinct security sub-systems, which are available on many commercial mobile devices. They can be realized either as a standalone chip attached to the motherboard, or integrated into an NFC chip. Secure elements usually use standardized and widely supported JavaCard environment that can run Java applets. Removable secure environments are security co-processors which can be attached to the device via peripheral interfaces, such as Universal Integrated Circuit Cards (UICC) (also known as SIM cards) and plug-in cards for an SD card slot (ASSD cards).

Returning to Figure 1, secure environment E is a secure element of host H and is trusted to securely execute the applet a. Moreover, M is a regular market place for mobile apps managed by the (OS or device) vendor, while S is a secure environment stakeholder who manages an online service or system. In the present example, stakeholder S shares a symmetric key K_{E} with each secure environment E the stakeholder S has deployed. This key K_{E} may be different for each single secure environment or may be a global key for a particular type or class of secure environments deployed by the stakeholder. While individual keys increase the security of the method for each secure environment, a global key for more than one secure environment may have the benefit of a simplified storage ad key management for the stakeholder. The mobile host H is aware of a secure environment identifier id_{E}, which uniquely identifies the secure environment E connected to the host H.

In the present example, all interactions between the developer D, the stakeholder S, the application market M, the host H and the secure environment E are performed over secure (authentic and confidential) channels. For example, the Global Platform specifications describe various standards for secure channel protocols (e.g., AES-based SCP03, or SCP10 based on an asymmetric crypto-system, or SCP81 based on SSL/TLS), which can be used for secure channel establishment and communication. In other examples only some of the channels, or none of the channels may be secured.

Figure 1 further illustrates the interactions of the involved entities (i.e. developer, stakeholder, application market, host, secure environment) for an exemplary method. In particular, the interactions are an applet certification 100 by the stakeholder, a mobile application publishing 200 by the developer, a mobile application download 300 and installation 310 by the host, a token request and download 400 by the host, and an applet installation 500 in the secure environment. In other embodiments, the interactions may be performed differently or by different entities. For example, the application or the applet can be downloaded directly from the developer or the stakeholder in other embodiments. In the following, the different interactions will be described in more detail.

### Applet Certification (Step 100):

As a first step, the developer D submits an applet a (Step 110) via a code submission system to the stakeholder S for certification. The code submission system may be specific portal of the stakeholder, specifically designed for up-loading applets for certification.

The applet a is accompanied with an access control policy P defining which mobile applications will be allowed to communicate with this applet. In the present example, the applet policy P includes a reference to application A. However, in other examples the applet policy may include additional references to further applications, or classes of applications or no particular restriction, i.e. the applet may be accessed by any application.

Upon receipt of the applet a, from the developer, the stakeholder S performs applet verification according to its security policy. This verification may be a manual or an automated procedure. In particular, the stakeholder may perform code vetting process (as typically done by OS vendors for mobile applications). If the applet a passes the verification procedure, the stakeholder S creates an applet certificate certₐ (Step 120) and further generates an applet-specific key Kₐ (Step 130) and encrypts the applet a under Kₐ to create an encrypted applet ea (Step 140). The encrypted applet ea is then returned to the developer D together with its certificate certₐ (Step 150). Furthermore, the encrypted applet, applet access policy and the corresponding applet key and/or certificate are stored in a database or a data warehouse of the stakeholder or a further entity connected to the stakeholder (Step 160). In other examples, in which applet confidentiality is not required, Step 140 of applet encryption can be omitted. In still other examples, Step 120 is omitted and the applet is only encrypted by the stakeholder. As an alternative to Step 120, the applet certificate certₐ may be replaced with a message authentication code (MAC) of the applet generated under the key Kₐ.

Even though the certified or encrypted applet ea is returned to the developer, this step may be omitted and the applet ea may be submitted to an application market directly or may be published through a portal of the stakeholder for download.

### Mobile App Publishing (Step 200):

To publish a mobile application at the application market M, the developer D includes the encrypted applet ea and its certificate certₐ into an installation package of the mobile application A (Step 210) and submits it to the market M (Step 220). If the market M requires verification of the mobile application A, the verification process is performed (Step 230) and the installation package is published at the app market and will be ready for download by mobile users thereafter (Step 240).

Alternatively to packaging the applet a and its certificate certₐ together with a mobile application A, the developer D may opt to include a download link referencing the required applet, e.g., into application A's manifest (not shown in Figure 1).

### Mobile Application Download and Installation (Steps 300 and 310):

Host H may download the installation package including the application A and the encrypted applet ea from the market M. Prior art mechanisms for mobile app downloading may be applied (Step 300). The installation procedure for the applet extends the application installation process (Step 310) with routines to detect applet-related dependencies and, if detected, to trigger a token download procedure.

Token Request and Download (Step 400):

When the mobile host H detects that the mobile application A requires an applet a, it connects to the stakeholder S and requests an applet installation token for the secure environment with the secure environment identifier id_{E}, which uniquely defines the secure environment, and an applet identifier, id_{A}, such as the certificate certₐ or a hash value of the encrypted applet ea (Step 410). Further examples of the different identifiers are known in the prior art.

Upon receiving the request from the host H, the stakeholder S generates a token. The token is encrypted using the symmetric secure environment key K_{E} and contains at least the applet key Kₐ and the applet policy P, which mentions applications allowed to access the applet. In further examples, the token may only contain the applet key Kₐ. In examples in which the applet policy P is omitted from the token, it may be assumed that no specific restrictions regarding use of the applet exist. In this specific example, stakeholder S generates the token Tₐ for a given id_{E} and applet a, where Tₐ is an authenticated encryption (which is denoted as encMAC) under the secure environment key K_{E} over the applet key Kₐ and the applet policy P (Step 420). As an optional step the stakeholder derives an applet installation key Kₐᵢ by applying a one-way key derivation function (KDF) to the applet key Kₐ and the identifier id_{E} (Step 430). In other examples, however, the applet installation key Kₐᵢ may be randomly generated by the stakeholder. However, Kₐᵢ derived from the applet key Kₐ and the identifier id_{E} has an advantage beyond randomly generated Kₐᵢ, that such Kai does not need to be stored by the stakeholder, but can be always derived from Kₐ and id_{E}. The resulting token Tₐ and the applet installation key Kₐᵢ are returned to H (Step 440).

In the present example, the token download procedure requires interaction between the mobile host H and a stakeholder S. While in some embodiments, such a communication could be avoided using cryptographic techniques such as key derivation and oblivious hash functions, in this example, the stakeholder S is kept in the installation path in order to implement predetermined access conditions, for example, license fees. In particular, if a license fee is required, the token download procedure can be preceded by a payment procedure (Step 435), which can be realized in the same way as a mobile application purchase.

### Applet Installation (Step 500):

To install the applet a, the mobile host H sends the applet ea, the token Tₐ and the proof of possession of Kₐᵢ to the secure environment E (Step 510), which extracts Kₐ and P from the token Tₐ (Step 520) and derives the key Kₐᵢ (Step 530) by applying a one-way key derivation function to values Kₐ and id_{E}. In other embodiments, however, the key Kₐᵢ can be extracted from the token (in case, it was included by the stakeholder). Next, the secure environment verifies if Kₐᵢ is known to the host (e.g., by means of challenge-response authentication) (Step 540). Further, the secure environment E decrypts applet ea with the key Kₐ in order to obtain the applet a (Step 550), verifies certₐ (Step 560) using certificate verification, MAC verification, or some other suitable procedure, installs applet a (Step 570) and adds the applet policy P for the applet a into the access control list ACL (Step 580). The host processor may read the ACL to analyze whether a request of an application to access applet a is bound to be successful (as defined by Global Platform), or, alternatively, the access request may be verified by the secure element internally.

### Applet Invocation:

The following is an example of an applet invocation.

As soon as the applet a is installed, it can be invoked by user space applications residing on the mobile host H. We realized the communication between the apps and applets as defined by the Global Platform Access Control Specification. In particular, a communication channel is mediated by the OS-level component access control enforcer (ACE), which fetches the access control list (ACL) from the secure environment-internal access rule application master (ARA-M) component. In this example, the ACL comprises or consists of data objects (DO) which contain access rules for the secure environment access and application protocol data unit (APDU) filtering. Rules are identified by the identifier AID-REF-DO of the applet to be accessed and the hash of the application's certificate Hash-REF-DO. Further, it may include an APDU filter including an APDU header and an APDU filter mask. When an app requests access to an applet identified by AID-REF-DO, ACE identifies Hash-REF-DO of the app and reads the ACL rule for the specific (AID-REF-DO, Hash-REF-DO) pair. Access is granted, if such access is permitted by the ACL rule, or denied, if access is prohibited by an ACL rule or no rule is found.

As an alternative to the exemplary installation procedure described above, the following on-demand installation example can be considered.

Figure 2 discusses an exemplary mobile platform architecture. It includes components to support the methods described in this description, as well as standard components defined by the Global Platform Reference Specification.

The architecture separates the mobile platform into two independent instances: Mobile host H and secure element E. Applications are deployed on H via the modified application installer Al, which interacts with an untrusted service manager USM for applet deployment and token management. At runtime, applications interact with their applets via the secure environment API (SE API) that embeds the Global Platform-defined ACE.

In the following, two different use cases are described: Firstly, the download and installation of applet-dependent apps, and secondly, execution of applet-dependent apps with respect to the example illustrated by Figure 2.

### Download and installation of applet-dependent apps (Step 800):

When the applet installer Al receives a request to install an applet-dependent application A (Step 810), A is first extracted from the application package and installed on the mobile host H (Step 820). Next, Al extracts the applet package AP (including or consisting of the applet ea and its certificate certₐ) and sends it to the untrusted service manager, USM, (Step 830). USM stores AP in its internal storage and requests a token Tₐ via a secure communication channel from the stakeholder S using, for example, the remote application management over HTTP protocol (SCP81) (Step 840). Next, the secure element applet manager, SEAM, starts the installation process by requesting the applet package AP and token Tₐ from USM (Step 850). It proceeds to verify the integrity and authenticity of Tₐ using the secret key K_{E} shared by the secure element E and the stakeholder S and decrypts Tₐ using K_{E}. Further, the encrypted applet ea and its certificate certₐ are extracted by the USM, decrypted using Kₐ (which is embedded in Tₐ), and certₐ is verified. If the verification process is successful, the applet a is ready for installation. Finally, SEAM deploys the new ACL rules to the ARA-M Applet (Step 860) and installs the applet a on the secure element E (Step 870).

Execution of applet-dependent apps (Step 900):

Either on system boot, or just before the access rules are verified, the secure element access control enforcer (ACE) fetches and caches all current ACL-rules from the ARA-M Applet (Step 910). When an application requests access to an applet a (Step 920), AID-REF-DO and Hash-REF-DO are retrieved by ACE and access rights for applet access are verified (Step 930). If the verification was successful, ACE grants access and forwards applet access request to the SEAM (Step 940), which verifies the installation status of the applet. If the applet is not yet installed, SEAM triggers the applet installation process (Step 950). Finally, a communication request is forwarded to the applet (Step 960) and the communication channel is successfully established between the app and the applet.

An exemplary implementation can be simulated by means of a JavaCard emulator, such as jCard Sim. The secure environment can in those cases be implemented as an Android application holding an instance of a JavaCard emulator.

For example, a system as described herein may include a smartphone, such as Samsung Galaxy S3, as a host and a wearable accessory, such as a Samsung Galaxy Gear SM V700 smartwatch, as a secure environment, or running a secure environment. The stakeholder may be run on a server platform, such as a Linux server. The communication protocols between the different components can be implemented using different techniques based on the functionalities as described herein.

The examples and implementations described in this description can be modified by a person of skill in the art without departing from the scope of the invention.

This application, inter alia, also relates to the following aspects:
1. A method for distributing applets for at least one application, A, accessing the applets in a secure environment, the method including the following steps:
   - certifying an applet, a, by a stakeholder, S, by
      (a) submitting, by a developer, D, the applet, a, and an applet policy, P, to the stakeholder, S, for certification;
      (b) generating, by the stakeholder, an applet key, Kₐ, certifying the applet, and storing the applet key, Kₐ, and the certified applet, ea;
   - installing the applet in a secure environment, E, connectable to a host, H, by
      (a) sending, by the host, a secure environment identifier, id_{E}, and an applet identifier, idₐ, to the stakeholder and requesting, by the host, a token, Tₐ, from the stakeholder, wherein the token is encrypted using a secure environment key, K_{E}, and the encrypted token includes at least the applet key;
      (b) receiving the token, by the host;
      (c) sending, by the host, the certified applet and the token to the secure environment;
      (d) installing, by the secure environment, the certified applet in the secure environment using information extracted from the token.
2. The method according to the aspect 1, wherein the step of certifying the applet includes encrypting the applet using the applet key, Kₐ.
3. The method according to any of the pervious aspects, wherein the step of certifying the applet includes generating an applet certificate certₐ.
4. The method according to aspect 3, wherein the applet certificate, certₐ, comprises at least one of a message authentication code, MACₐ, generated from the applet, a, using the applet key, Kₐ, and a public certificate generated from the applet, a, using a key of the stakeholder, S.
5. The method according to any of the preceding aspects, wherein the certified applet is published in a distribution environment, in particular, an application market and the host requests the certified applet from the application market.
6. The method according to aspect 5, wherein the certified applet is published together with a mobile application, A, on a mobile app market, or on a dedicated applet market.
7. The method according to any of the previous aspects, wherein the applet identifier is at least one of an applet package name, a randomly generated unique identifier, the applet itself, the certified applet, a hash of the applet, or an applet certificate.
8. The method according to any of the preceding aspects, wherein the secure environment key, K_{E}, is shared between the secure environment and the stakeholder.
9. The method according to any of the preceding aspects, wherein the step of receiving the token further includes receiving, by the host, a further key, Kₐᵢ, from the stakeholder.
10. The method according to aspect 9, wherein the further key, Kₐᵢ, is an applet installation key derived from the secure environment identifier, id_{E}, and the applet key, Kₐ.
11. The method according to any of the preceding aspects, wherein the step of installing the applet in the secure environment further comprises extracting the applet key, Kₐ from the token, Tₐ.
12. The method according to any of aspects 9 through 11, wherein the step of installing the applet in the secure environment further comprises deriving the authentication key, Kₐᵢ, in the secure environment, using the applet key, Kₐ, and the secure environment identifier, id_{E}.
13. The method according to any of aspects 9 through 12, wherein the secure environment, E, obtains a proof of possession of the authentication key, Kₐᵢ, by the host.
14. The method according to any of aspects 9 through 13, wherein the secure environment, E, authenticates the host based on a challenge- and-response protocol on the basis of the obtained authentication key, Kₐᵢ.
15. The method according to any of the preceding aspects, wherein the step of installing the applet in the secure environment further comprises verifying the certified applet and decrypting the applet.
16. The method according to the previous aspect, wherein the applet is decrypted in the secure environment using the applet key, Kₐ, obtained from the token, Tₐ.
17. The method of any of the previous aspects, wherein the encrypted token further includes the applet policy, P, and the step of installing the applet in the secure environment further comprises extracting the policy, P, from the token, Tₐ.
18. The method of any of the preceding aspects, wherein the step of installing the applet in the secure environment further comprises adding the applet policy to an access controlling entity of the secure environment.
19. The method of any of the preceding aspects, wherein the step of installing the applet comprises installation of the applet, when a predetermined access condition is fulfilled, wherein fulfilling the predetermined access condition comprises at least one of the positively authenticating the mobile host, successfully decrypting the token, successfully decrypting the applet, and successfully verifying the applet certificate.
20. The method of the preceding aspect, wherein the host fetches information from the access controlling entity to decide whether the application may access the applet in the secure environment.
21. The method of any of the previous aspects, wherein the applet policy, P, includes information which applications may access the applet in the secure environment.
22. System configured to implement the method of any of the previous aspects including the stakeholder, the secure environment, the host and the developer.
23. A stakeholder for certifying applets and issuing applet installation tokens, the stakeholder comprising:
   - processing circuitry adapted to receive, from a developer, D, an applet, a, and an applet policy, P, for certification and to generate an applet key, Kₐ, to certify the applet, a, to store the applet key, Kₐ, and the certified applet, ea, in a data warehouse of the stakeholder;
   - the processing circuitry further adapted to receive, from a host, a secure environment identifier, id_{E}, and an applet identifier, idₐ, to retrieve, from the data warehouse, the applet key, Kₐ, and to generate an encrypted token, Tₐ, using a secure environment key, K_{E}, and comprising at least the applet key, Kₐ; and
   - the processing circuitry further configured to send the token to the host.
24. A host including processing circuitry and the host connectable to a secure environment, wherein the processing circuitry is configured to installing a certified applet in the secure environment, by requesting and receiving an encrypted token, Tₐ, from a stakeholder, the token comprising at least an applet key; and sending the certified applet and the token to the secure environment.
25. System of the previous aspect configured for a plurality of hosts, each of which requests a token from the stakeholder based on its corresponding secure environment identifier and the applet identifier.
26. A secure environment for installation and execution of applets, the secure environment comprising processing circuitry adapted to receive a certified applet and a token from a host; and to install the certified applet in the secure environment using information extracted from the token.
27. A secure code distribution system comprising at least one host according to aspect 24; at least one secure environment according aspect 26; and a stakeholder according to aspect 23.
28. A computer-readable non-transitory medium comprising a program code, which is configured, when running on a programmable hardware component, to certify an applet, a, by receiving, from a developer, D, the applet, a, and an applet policy, P; and to generate an applet key, Kₐ, to certify the applet, and to store the applet key, Kₐ, and the certified applet, ea; the code further configured to encrypt a token, Tₐ, using a secure environment key, K_{E}, wherein the token comprises at least the applet key, Kₐ; and the code further configured to send the token, Tₐ, in response to a request for a token by a host.
29. A computer-readable non-transitory medium comprising a program code, which is configured, when running on a programmable hardware component, to install an applet, a, in a secure environment, E, by sending a secure environment identifier, id_{E}, and an applet identifier, idₐ, to a stakeholder and requesting a token, Tₐ, from the stakeholder, wherein the token is encrypted using a secure environment key, K_{E}, and the encrypted token includes at least an applet key; the code further configured to receive the token and send the certified applet and the token to the secure environment; and the code further configured to install the certified applet in the secure environment using information extracted from the token.

## Claims

1. A method for distributing applets for at least one application, A, accessing the applets in a secure environment, the method including the following steps:
- certifying (Step 100) an applet, a, by a stakeholder, S, by
(a) submitting (Step 110), by a developer, D, the applet, a, and an applet policy, P, to the stakeholder, S, for certification;
(b) generating (Step 130), by the stakeholder, an applet key, Kₐ,
(c) encrypting (Step 140), by the stakeholder, the applet using the applet key Kₐ, thereby generating an encrypted applet ea; and
(d) storing (Step 160) the applet key, Kₐ, and the encrypted applet, ea;
- publishing (Step 200), by the developer, the application, A, by submitting (Step 210) the application, A, together with the encrypted applet, ea; to a distribution environment;
- installing the applet in a secure environment, E, connectable to a host, H, by downloading (Step 300), by the host, the application, A, together with the encrypted applet, ea, from the distribution environment, and
(a) sending, by the host, a secure environment identifier, id_{E}, and an applet identifier, idₐ, to the stakeholder and requesting, by the host, a token, Tₐ, from the stakeholder, wherein the token is encrypted (Step 420), by the stakeholder, using a secure environment key, K_{E}, which is shared only between the stakeholder and the secure environment, and the encrypted token, Tₐ, includes at least the applet key, Kₐ and the applet policy;
(b) receiving the token, by the host from the stakeholder;
(c) sending, by the host, the encrypted applet ea and the token to the secure environment;
(d) installing, by the secure environment, the applet in the secure environment by
(d1) decrypting (Step 520), by the secure environment, the token, Tₐ, using the secure environment key K_{E}, thereby extracting the applet key Kₐ and the applet policy;
(d2) decrypting (Step 550), by the secure environment, the encrypted applet, ea, using the applet key Kₐ, resulting in a decrypted applet a,
(d3) installing (Step 570), by the secure environment, the decrypted applet a.

2. The method according to claim 1, wherein the secure environment key K_{E} is an asymmetric public-private key pair, wherein the public key of the key pair is used by the stakeholder for encrypting the token and the private key of the key pair is accessible by the secure environment only and is used by the secure environment for decrypting the token.

3. The method according to any of the pervious claims, wherein the step of certifying the applet includes generating an applet certificate certₐ.

4. The method according to any of the preceding claims, wherein the distribution environment is an application market and the host requests the application A together with the encrypted applet ea from the application market.

5. The method according to any of the preceding claims, wherein the step of receiving the token further includes receiving, by the host, a further key, Kₐᵢ, from the stakeholder.

6. The method according to claim 5, wherein the further key, Kₐᵢ, is an applet installation key derived from the secure environment identifier, id_{E}, and the applet key, Kₐ.

7. The method according to any of the preceding claims, wherein the step of installing the applet in the secure environment further comprises verifying the certified applet.

8. Method of any of the preceding claims, wherein the step of installing the applet comprises installation of the applet, when a predetermined access condition is fulfilled, wherein fulfilling the predetermined access condition comprises at least one of the positively authenticating the mobile host, successfully decrypting the token, successfully decrypting the applet, and successfully verifying the applet certificate

9. Method of any of the previous claims, wherein the applet policy, P, includes information which applications may access the applet in the secure environment.

10. A stakeholder for certifying applets and issuing applet installation tokens, the stakeholder comprising:
- processing circuitry adapted to receive, from a developer, D, an applet, a, and an applet policy, P, for certification and to generate an applet key, Kₐ, to encrypt the applet, a, to store the applet key, Kₐ, and the encrypted applet, ea, in a data warehouse of the stakeholder;
- the processing circuitry further adapted to receive, from a host connectable to a secure environment, a secure environment identifier, id_{E}, and an applet identifier, idₐ, to retrieve, from the data warehouse, the applet key, Kₐ, and to generate an encrypted token, Tₐ, using a secure environment key, K_{E}, which is shared only between the stakeholder and the secure environment, and comprising at least the applet key and the applet policy;
- the processing circuitry further configured to send the token to the host.

11. A host including processing circuitry and the host connectable to a secure environment, wherein the processing circuitry is configured to download a certified, encrypted applet, ea, from a distribution environment and installing the certified, encrypted applet in the secure environment, by requesting and receiving an encrypted token, Tₐ, from a stakeholder, the token comprising at least an applet key and an applet policy, the token being encrypted by the stakeholder using a secure environment key K_{E} which is shared only between the stakeholder and the secure environment; and sending the certified applet and the token to the secure environment for decryption and installation.

12. A secure environment for installation and execution of applets, the secure environment comprising processing circuitry adapted
- to receive a certified encrypted applet ea, which has been encrypted using an applet key Ka by a stakeholder, and a encrypted token which comprises the encryption key Ka and which has been encrypted by the stakeholder using a secure environment key, K_{E}, which is shared only between the stakeholder and the secure environment, from a host;
- to decrypt the token using the secure environment key KE, thereby extracting the applet key Ka;
- to decrypt the encrypted applet ea using the extracted applet key Ka, resulting in a decrypted applet a; and
- to install the decrypted applet in the secure environment.

13. A secure code distribution system comprising at least one host according to claim 11; at least one secure environment according claim 12; and a stakeholder according to claim 10.

14. A computer-readable non-transitory medium comprising a program code, which is configured, when running on a programmable hardware component, to install an applet, a, in a secure environment, E, by
- downloading a certified encrypted applet ea from a distribution environment
- sending a secure environment identifier, id_{E}, and an applet identifier, idₐ, to a stakeholder and requesting a token, Tₐ, from the stakeholder, wherein the token is encrypted using a secure environment key, K_{E}, which is shared only between the stakeholder and the secure environment, and the encrypted token includes at least an applet key Kₐ and an applet policy;
the code further configured to receive the token and send the certified encrypted applet ea and the token to the secure environment; and the code further configured to install the certified encrypted applet, ea, in the secure environment by using the secure environment key KE to extract the applet key Ka from the encrypted token and by decrypting the encrypted applet ea using the extracted applet key Ka.

## Patentansprüche

1. Verfahren zum Verbreiten von Applets für mindestens eine Anwendung, A, und zum Zugreifen auf die Applets in einer sicheren Umgebung, wobei das Verfahren die folgenden Schritte umfasst:
- Zertifizieren (Schritt 100) eines Applets, a, durch einen Stakeholder, S, durch
(a) Einreichen (Schritt 110) des Applets, a, und einer Applet-Richtlinie, P, durch einen Entwickler, D, an den Stakeholder, S, zum Zertifizieren;
(b) Erzeugen (Schritt 130) eines Applet-Schlüssels, Kₐ, durch den Stakeholder,
(c) Verschlüsseln (Schritt 140) des Applets unter Verwendung des Applet-Schlüssels, Kₐ, durch den Stakeholder und damit Erzeugen eines verschlüsselten Applets, ea; und
(d) Speichern (Schritt 160) des Applet-Schlüssels, Kₐ, und des verschlüsselten Applets, ea;
- Veröffentlichen (Schritt 200) der Anwendung, A, durch den Entwickler durch Einreichen (Schritt 210) der Anwendung, A, zusammen mit dem verschlüsselten Applet, ea, an eine Verbreitungsumgebung;
- Installieren des Applets in einer mit einem Host, H, verbindbaren sicheren Umgebung, E, durch Herunterladen (Schritt 300) der Anwendung, A, zusammen mit dem verschlüsselten Applet, ea, von der Verbreitungsumgebung durch den Host, und
(a) Versenden einer sicheren Umgebungskennzeichnung, id_{E}, und einer Applet-Kennzeichnung, idₐ, an den Stakeholder durch den Host und Anfordern eines Tokens, Tₐ, vom Stakeholder durch den Host, wobei das Token vom Stakeholder verschlüsselt ist (Schritt 420) unter Verwendung eines sicheren Umgebungsschlüssels, K_{E}, der nur zwischen dem Stakeholder und der sicheren Umgebung geteilt ist, und wobei das verschlüsselte Token, Tₐ, mindestens den Applet-Schlüssel, Kₐ, und die Applet-Richtlinie umfasst;
(b) Empfangen des Tokens durch den Host vom Stakeholder;
(c) Versenden des verschlüsselten Applets, ea, und des Tokens an die sichere Umgebung durch den Host;
(d) Installieren, durch die sichere Umgebung, des Applets in der sicheren Umgebung durch
(d1) Entschlüsseln (Schritt 520) des Tokens, Tₐ, durch die sichere Umgebung unter Verwendung des sicheren Umgebungsschlüssels, K_{E}, wodurch der Applet-Schlüssel, Kₐ, und die Applet-Richtlinie extrahiert werden;
(d2) Entschlüsseln (Schritt 550) des verschlüsselten Applets, ea, durch die sichere Umgebung unter Verwendung des Applet-Schlüssels, Kₐ, wodurch sich das entschlüsselte Applet, a, ergibt,
(d3) Installieren (Schritt 570) des entschlüsselten Applets, a, durch die sichere Umgebung.

2. Verfahren nach Anspruch 1, wobei der sichere Umgebungsschlüssel, K_{E}, ein asymmetrisches öffentlich-privates Schlüsselpaar ist, wobei der öffentliche Schlüssel des Schlüsselpaares vom Stakeholder zum Verschlüsseln des Tokens verwendet wird und der private Schlüssel des Schlüsselpaares ausschließlich durch die sichere Umgebung zugänglich ist und von der sicheren Umgebung zum Entschlüsseln des Tokens verwendet wird.

3. Verfahren nach einem der vorhergehenden Ansprüche, wobei der Schritt des Zertifizierens des Applets das Erzeugen eines Applet-Zertifikats, certₐ, umfasst.

4. Verfahren nach einem der vorhergehenden Ansprüche, wobei die Verbreitungsumgebung ein Anwendungsmarkt ist und der Host die Anwendung, A, zusammen mit dem verschlüsselten Applet, ea, vom Anwendungsmarkt anfordert.

5. Verfahren nach einem der vorhergehenden Ansprüche, wobei der Schritt des Empfangens des Tokens ferner das Empfangen eines weiteren Schlüssels, Kₐᵢ, vom Stakeholder durch den Host umfasst.

6. Verfahren nach Anspruch 5, wobei der weitere Schlüssel, Kₐᵢ, ein Anwendungsinstallationsschlüssel ist, der von der sicheren Umgebungskennzeichnung, id_{E}, und dem Anwendungsschlüssel, Kₐ' abgeleitet ist.

7. Verfahren nach einem der vorhergehenden Ansprüche, wobei der Schritt des Installierens des Applets in der sicheren Umgebung ferner das Verifizieren des zertifizierten Applets umfasst.

8. Verfahren nach einem der vorhergehenden Ansprüche, wobei der Schritt des Installierens des Applets das Installieren des Applets bei Erfüllen einer vorherbestimmten Zugriffsvoraussetzung umfasst, wobei das Erfüllen der vorherbestimmten Zugriffsvoraussetzung das positive Authentifizieren des mobilen Hosts und/oder das erfolgreiche Entschlüsseln des Tokens und/oder das erfolgreiche Entschlüsseln des Applets und/oder das erfolgreiche Verifizieren des Applet-Zertifikats umfasst.

9. Verfahren nach einem der vorhergehenden Ansprüche, wobei die Applet-Richtlinie, P, Information dazu umfasst, welche Anwendungen in der sicheren Umgebung auf das Applet zugreifen können.

10. Ein Stakeholder zum Zertifizieren von Applets und Erteilung von Applet-Installations-Tokens, wobei der Stakeholder umfasst:
- Verarbeitungsschaltkreise, die dazu eingerichtet sind, von einem Entwickler, D, ein Applet, a, und eine Applet-Richtlinie, P, zu empfangen und ein Applet-Schlüssel, Ka, zu erzeugen, das Applet zu verschlüsseln, den Applet-Schlüssel, Ka, und das verschlüsselte Applet, ea, in einem Datenlager des Stakeholders zu speichern;
- die Verarbeitungsschaltkreise ferner ausgelegt sind zum Empfangen einer sicheren Umgebungskennzeichnung, idE, und einer Applet-Kennzeichnung, ida, von einem an eine sichere Umgebung anbindbaren Host, zum Abrufen des Applet-Schlüssels, Ka, aus dem Datenlager und zum Erzeugen eines verschlüsselten Tokens, Ta, unter Verwendung eines sicheren Umgebungsschlüssels, KE, welcher ausschließlich zwischen dem Stakeholder und der sicheren Umgebung geteilt ist und mindestens den Applet-Schlüssel und die Applet-Richtlinie umfasst;
- die Verarbeitungsschaltkreise ferner zum Senden des Tokens an den Host eingerichtet sind.

11. Ein Host mit Verarbeitungsschaltkreisen, und der Host an eine sichere Umgebung anbindbar, wobei die Verarbeitungsschaltkreise eingerichtet sind, ein zertifiziertes, verschlüsseltes Applet, ea, von einer Verbreitungsumgebung herunterzuladen und das zertifizierte, verschlüsselte Applet in der sicheren Umgebung zu installieren, durch Anfordern und Empfangen eines verschlüsselten Tokens, Tₐ, von einem Stakeholder, wobei das Token mindestens einen Applet-Schlüssel und eine Applet-Richtlinie umfasst, wobei das Token durch den Stakeholder unter Verwendung eines sicheren Umgebungsschlüssels, K_{E}, verschlüsselt ist, welcher ausschließlich zwischen dem Stakeholder und der sicheren Umgebung geteilt ist; und Senden des zertifizierten Applets und des Tokens an die sichere Umgebung zum Entschlüsseln und Installieren.

12. Eine sichere Umgebung zum Installieren und Ausführen von Applets, wobei die sichere Umgebung Verarbeitungsschaltkreise umfasst, die ausgelegt sind
- zum Empfangen eines zertifizierten verschlüsselten Applets, ea, welches von einem Stakeholder unter Verwendung eines Applet-Schlüssels, Kₐ' verschlüsselt wurde, und eines verschlüsselten Tokens, welches den Verschlüsselungsschlüssel, Kₐ, umfasst und welches vom Stakeholder unter Verwendung eines sicheren Umgebungsschlüssels, K_{E}, verschlüsselt wurde, wobei der Umgebungsschlüssel, K_{E}' ausschließlich zwischen dem Stakeholder und der sicheren Umgebung geteilt ist, von einem Host;
- zum Entschlüsseln des Tokens unter Verwendung des sicheren Umgebungsschlüssels, K_{E}, wodurch der Applet-Schlüssel, Kₐ, extrahiert wird;
- zum Entschlüsseln des verschlüsselten Applets, ea, unter Verwendung des Applet-Schlüssels, Kₐ, wodurch sich das entschlüsselte Applet, a, ergibt; und
- zum Installieren des entschlüsselten Applets in der sicheren Umgebung.

13. Ein sicheres Code-Verbreitungssystem, das mindestens einen Host nach Anspruch 11, mindestens eine sichere Umgebung nach Anspruch 12 und einen Stakeholder nach Anspruch 10 umfasst.

14. Ein computerlesbares, nichtvergängliches Medium, umfassend Programmcode, der eingerichtet ist, wenn er auf einer programmierbaren Hardwarekomponente läuft, ein Applet in einer sicheren Umgebung, E, zu installieren, durch
- Herunterladen eines zertifizierten verschlüsselten Applets, ea, aus einer Verbreitungsumgebung;
- Versenden einer sicheren Umgebungskennzeichnung, idE, und einer Applet-Kennzeichnung, ida, an einen Stakeholder und Anfordern eines Tokens, Ta, vom Stakeholder, wobei das Token verschlüsselt ist unter Verwendung eines sicheren Umgebungsschlüssels, KE, der nur zwischen dem Stakeholder und der sicheren Umgebung geteilt wird, und wobei das verschlüsselte Token mindestens einen Applet-Schlüssel, Ka, und eine Applet-Richtlinie umfasst;
der Code ferner eingerichtet ist, das Token zu empfangen und das zertifizierte verschlüsselte Applet, ea, und das Token an die sichere Umgebung zu versenden; und der Code ferner eingerichtet ist, das zertifizierte verschlüsselte Applet, ea, in der sicheren Umgebung zu installieren unter Verwendung des sicheren Umgebungsschlüssels, K_{E}, zum Extrahieren des Applet-Schlüssels, Kₐ, vom verschlüsselten Token und durch Entschlüsseln des verschlüsselten Applets, ea, unter Verwendung des extrahierten Applet-Schlüssels, Kₐ.

## Revendications

1. Procédé pour distribuer des microprogrammes/appliquettes ou applets pour au moins une application, A, en accédant aux applets dans un environnement sécurisé, le procédé incluant les étapes qui suivent :
- la certification (Etape 100) d'un applet, a, par une partie prenante, S, en réalisant les actions qui suivent :
(a) la soumission (Etape 110), par un développeur, D, de l'applet, a, et d'une police d'applet, P, à la partie prenante, S, dans un but de certification ;
(b) la génération (Etape 130), par la partie prenante, d'une clé d'applet, Kₐ ;
(c) le cryptage (Etape 140), par la partie prenante, de l'applet en utilisant la clé d'applet, Kₐ, d'où ainsi la génération d'un applet crypté, ea ; et
(d) le stockage (Etape 160) de la clé d'applet, Kₐ, et de l'applet crypté, ea ;
- la publication (Etape 200), par le développeur, de l'application, A, en soumettant (Etape 210) l'application, A, en association avec l'applet crypté, ea, à un environnement de distribution ;
- l'installation de l'applet dans un environnement sécurisé, E, lequel environnement peut être connecté à un hôte, H, en téléchargeant (Etape 300), au moyen de l'hôte, l'application, A, en association avec l'applet crypté, ea, depuis l'environnement de distribution ; et
(a) l'envoi, par l'hôte, d'un identifiant d'environnement sécurisé, id_{E}, et d'un identifiant d'applet, idₐ, à la partie prenante et la demande en requête, par l'hôte, d'un jeton, Tₐ, auprès de la partie prenante, dans lequel le jeton est crypté (Etape 420), par la partie prenante, en utilisant une clé d'environnement sécurisé, K_{E}, laquelle clé est partagée seulement entre la partie prenante et l'environnement sécurisé, et le jeton crypté, Tₐ, inclut au moins la clé d'applet, Kₐ, et la police d'applet ;
(b) la réception du jeton par l'hôte, en provenance de la partie prenante ;
(c) l'envoi, par l'hôte, de l'applet crypté, ea, et du jeton à l'environnement sécurisé ;
(d) l'installation, par l'environnement sécurisé, de l'applet dans l'environnement sécurisé en réalisant les actions qui suivent :
(d1) le décryptage (Etape 520), par l'environnement sécurisé, du jeton, Tₐ, en utilisant la clé d'environnement sécurisé, K_{E}, d'où ainsi l'extraction de la clé d'applet, Kₐ, et de la police d'applet ;
(d2) le décryptage (Etape 550), par l'environnement sécurisé, de l'applet crypté, ea, en utilisant la clé d'applet, Kₐ, d'où ainsi l'obtention d'un applet décrypté, a ; et
(d3) l'installation (Etape 570), par l'environnement sécurisé, de l'applet décrypté, a.

2. Procédé selon la revendication 1, dans lequel la clé d'environnement sécurisé, K_{E}, est une paire asymétrique de clés publique-clé privée, dans lequel la clé publique de la paire de clés est utilisée par la partie prenante pour crypter le jeton et la clé privée de la paire de clés peut être accédée par l'environnement sécurisé seulement et elle est utilisée par l'environnement sécurisé pour décrypter le jeton.

3. Procédé selon l'une quelconque des revendications précédentes, dans lequel l'étape de certification de l'applet inclut la génération d'un certificat d'applet, certₐ.

4. Procédé selon l'une quelconque des revendications précédentes, dans lequel l'environnement de distribution est un marché d'applications et l'hôte demande en requête l'application, A, en association avec l'applet crypté, ea, auprès du marché d'applications.

5. Procédé selon l'une quelconque des revendications précédentes, dans lequel l'étape de réception du jeton inclut en outre la réception, par l'hôte, d'une autre clé, Kₐᵢ, en provenance de la partie prenante.

6. Procédé selon la revendication 5, dans lequel l'autre clé, Kₐᵢ, est une clé d'installation d'applet qui est dérivée à partir de l'identifiant d'environnement sécurisé, id_{E}, et de la clé d'applet, Kₐ.

7. Procédé selon l'une quelconque des revendications précédentes, dans lequel l'étape d'installation de l'applet dans l'environnement sécurisé comprend en outre la vérification de l'applet certifié.

8. Procédé selon l'une quelconque des revendications précédentes, dans lequel l'étape d'installation de l'applet comprend l'installation de l'applet, lorsqu'une condition d'accès prédéterminée est satisfaite, dans lequel la satisfaction de la condition d'accès prédéterminée comprend au moins une action prise parmi l'authentification de façon positive de l'hôte mobile, le décryptage couronné de succès du jeton, le décryptage couronné de succès de l'applet et la vérification couronnée de succès du certificat d'applet.

9. Procédé selon l'une quelconque des revendications précédentes, dans lequel la police d'applet, P, inclut une information permettant de déterminer les applications qui peuvent accéder à l'applet dans l'environnement sécurisé.

10. Partie prenante pour certifier des applets et pour délivrer des jetons d'installation d'applet, la partie prenante comprenant :
- un circuit de traitement qui est adapté de manière à ce qu'il reçoive, depuis un développeur, D, un applet, a, et une police d'applet, P, dans un but de certification et de manière à ce qu'il génère une clé d'applet, Kₐ, de manière à ce qu'il crypte l'applet, a, de manière à ce qu'il stocke la clé d'applet, Kₐ, et l'applet crypté, ea, au niveau d'un site formant entrepôt de données de la partie prenante ;
- le circuit de traitement est en outre adapté de manière à ce qu'il reçoive, depuis un hôte qui peut être connecté à un environnement sécurisé, un identifiant d'environnement sécurisé, id_{E}, et un identifiant d'applet, idₐ, de manière à ce qu'il récupère, au niveau du site formant entrepôt de données, la clé d'applet, Kₐ, et de manière à ce qu'il génère un jeton crypté, Tₐ, en utilisant une clé d'environnement sécurisé, K_{E}, laquelle clé est partagée seulement entre la partie prenante et l'environnement sécurisé, lequel jeton comprend au moins la clé d'applet et la police d'applet ;
- le circuit de traitement est en outre configuré de manière à ce qu'il envoie le jeton à l'hôte.

11. Hôte incluant un circuit de traitement, et l'hôte pouvant être connecté à un environnement sécurisé, dans lequel le circuit de traitement est configuré de manière à ce qu'il télécharge un applet crypté, ea, certifié depuis un environnement de distribution et de manière à ce qu'il installe l'applet crypté certifié dans l'environnement sécurisé, en demandant en requête et en recevant un jeton crypté, Tₐ, auprès d'une partie prenante et en provenance de celle-ci, le jeton comprenant au moins une clé d'applet et une police d'applet, le jeton étant crypté par la partie prenante en utilisant une clé d'environnement sécurisé, K_{E}, qui est partagée seulement entre la partie prenante et l'environnement sécurisé ; et de manière à ce qu'il envoie l'applet certifié et le jeton à l'environnement sécurisé dans le but de leur décryptage et de l'installation afférente.

12. Environnement sécurisé pour l'installation et l'exécution d'applets, l'environnement sécurisé comprenant un circuit de traitement qui est adapté de manière à ce qu'il réalise les actions qui suivent :
- la réception d'un applet crypté, ea, certifié, lequel a été crypté en utilisant une clé d'applet, Kₐ, par une partie prenante, et d'un jeton crypté qui comprend la clé de cryptage, Kₐ, et qui a été crypté par la partie prenante en utilisant une clé d'environnement sécurisé, K_{E}, laquelle clé est partagée seulement entre la partie prenante et l'environnement sécurisé, en provenance d'un hôte ;
- le décryptage du jeton en utilisant la clé d'environnement sécurisé, K_{E}, d'où ainsi l'extraction de la clé d'applet, Kₐ ;
- le décryptage de l'applet crypté, ea, en utilisant la clé d'applet extraite, Kₐ, d'où ainsi l'obtention d'un applet décrypté, a ; et
- l'installation de l'applet décrypté dans l'environnement sécurisé.

13. Système de distribution de code sécurisé comprenant au moins un hôte selon la revendication 11 ; au moins un environnement sécurisé selon la revendication 12 ; et une partie prenante selon la revendication 10.

14. Support non transitoire pouvant être lu par un ordinateur et comprenant un code de programme, lequel code est configuré, lorsqu'il est exécuté sur un composant matériel programmable, de manière à ce qu'il installe un applet, a, dans un environnement sécurisé, E, en réalisant les actions qui suivent :
- le téléchargement d'un applet crypté et certifié, ea, à partir d'un environnement de distribution ;
- l'envoi d'un identifiant d'environnement sécurisé, id_{E}, et d'un identifiant d'applet, idₐ, à une partie prenante et la demande en requête d'un jeton, Tₐ, auprès de la partie prenante, dans lequel le jeton est crypté en utilisant une clé d'environnement sécurisé, K_{E}, laquelle clé est partagée seulement entre la partie prenante et l'environnement sécurisé, et le jeton crypté inclut au moins une clé d'applet, Kₐ, et une police d'applet ;
le code étant en outre configuré de manière à ce qu'il reçoive le jeton et de manière à ce qu'il envoie l'applet crypté, ea, certifié et le jeton à l'environnement sécurisé ; et le code étant en outre configuré de manière à ce qu'il installe l'applet crypté, ea, certifié dans l'environnement sécurisé en utilisant la clé d'environnement sécurisé, K_{E}, de manière à ce qu'il extraie la clé d'applet, Kₐ, à partir du jeton crypté et en décryptant l'applet crypté, ea, en utilisant la clé d'applet extraite, Kₐ.
